Europäisches Patentamt

European Patent Office

Office européen des brevets

(19)

(11) **EP 1 480 467 A2**

(12) **EUROPEAN PATENT APPLICATION**

(43) Date of publication:
**24.11.2004 Bulletin 2004/48**

(51) Int Cl.$^7$: **H04N 9/31**

(21) Application number: **04251782.1**

(22) Date of filing: **26.03.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **16.06.2003 KR 2003038678
28.03.2003 US 457917 P**

(71) Applicant: **Samsung Electronics Co., Ltd.
Suwon-si, Gyeonggi-do 442-742 (KR)**

(72) Inventors:
• **Cho, Kun-ho
Suwon-si Gyeonggi-do (KR)**

• **Kim, Dae-sik
Yeongtong-gu Suwon-si, Gyeonggi-do (KR)**
• **Kim, Sung-ha
Gangnam-gu Seoul (KR)**
• **Lee, Hee-joong
Dongan-gu Anyang-si, Gyeonggi-do (KR)**

(74) Representative: **Geary, Stuart Lloyd et al
Venner Shipley LLP
20 Little Britain
London EC1A 7DH (GB)**

(54) **Video projector**

(57) A projection system and a method of forming a colour image are provided. In this method, a rising time and a falling time required to change image signals for a plurality of colour bars formed on a light valve are secured. First, at least one filter having a slit is installed. Next, incident light is scrolled by converting a rotation of a scrolling unit into a rectilinear motion of a lens cell of the scrolling unit through which the incident light passes. Thereafter, a beam emitted from a light source is separated according to colour using a colour separator which comprises a plurality of dichroic filters which each transmit a beam with one length from the incident beam and reflect beams with other lengths. Then, a plurality of colour beams separated by the colour separator and transmitted by the scrolling unit are made incident on corresponding colour areas of the light valve, whereby a plurality of colour bars are formed. Then, a black bar is formed between adjacent colour bars by controlling a distance between adjacent dichroic filters or controlling a width of the slit.

FIG. 8

EP 1 480 467 A2

## Description

The present invention relates to a video projection apparatus comprising a light source, a scrolling unit, a colour separator and a light valve.

There are two main types of projection television. 3-panel and single-panel. 3-panel systems use three light valves for modulating red , green and blue beams respectively. Single-panel system use one panel to modulate red, green and blue beams cyclically.

Single-panel projection systems provide an optical efficiency of only 1/3 of that of three-panel projection systems because the red, green and blue image components are formed sequentially rather than concurrently.

In a known single-panel projection system, white light is separated into red, green and blue beams using colour filters and the three monochromatic beams are sequentially transmitted to a light valve. The light valve modulates each beam independently. As described above, a single-panel projection system uses different coloured beams sequentially. Therefore, the light efficiency is reduced to 1/3 of the light efficiency of a three-panel projection system.

A modified single-panel system involves colour scrolling. Colour scrolling involves white light being separated into red, green and blue beams and the three coloured beams being scanned across panel in sequences such that, at any time, different locations on a panel are illuminated with different coloured light.

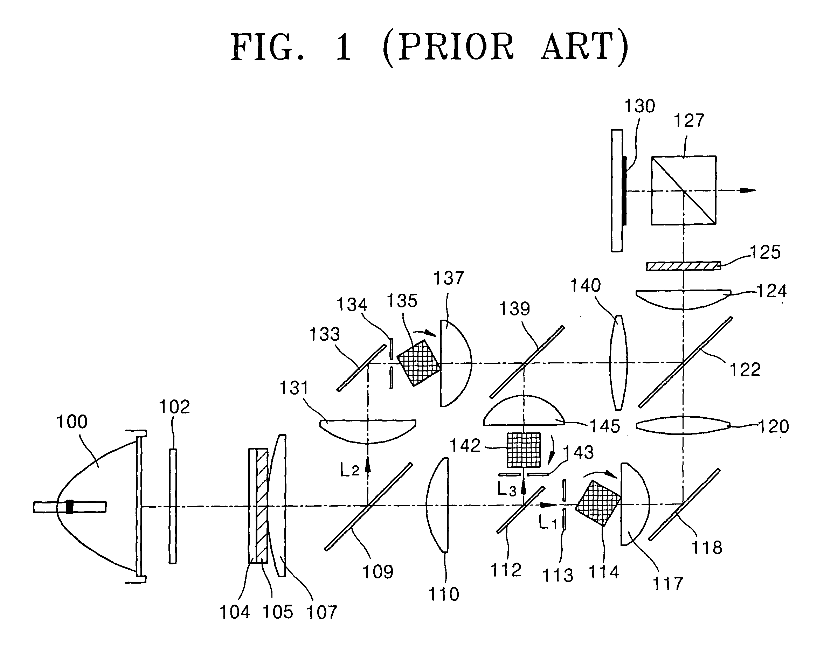

In a single-panel scrolling projection system, as shown in Figure 1, white light emitted from a light source 100 passes through first and second lens arrays 102, 104 and a polarization conversion system (PCS) 105 and is separated into red, green and blue beams by first through fourth dichroic filters 109, 112, 139, 122. To be more specific, the red beam R and the green beam G are transmitted by the first dichroic filter 109 and advance along a first light path $L_1$, while the blue beam B is reflected by the first dichroic filter 109 and travels along a second light path $L_2$. The red beam R and the green beam G on the first light path $L_1$ are separated by the second dichroic filter 112. The second dichroic filter 112 transmits the red beam R along the first light path $L_1$ and reflects the green beam G along a third light path $L_3$.

First through third prisms 114, 135 and 142 are disposed on the first through third light paths $L_1$, $L_2$, and $L_3$, respectively. The light emitted from the light source 100 is separated into the red, green and blue beams, and they are then scrolled while passing through corresponding first through third prisms 114, 135, 142. The first through third prisms 114, 135, 142 rotate at a uniform speed such that red, green and blue coloured bars are scanned across the light valve 130. The green and blue beams that travel along the second and third light paths $L_2$ and $L_3$ respectively are transmitted and reflected respectively by the third dichroic filter 139 and then combined. Finally, the red, green and blue beams are combined by the fourth dichroic filter 122. The combined beam is transmitted to a light valve 130 via a polarization beam splitter (PBS) 127. The light valve 130 modulates the beams spatially and temporally to a picture.

A condensing lens 107 is disposed next to the PCS 105 and light path correction lenses 110, 117, 131, 137, 145 are disposed along the first through third light paths $L_1$, $L_2$, $L_3$. Condensing lenses 120, 140 are disposed between the first and fourth dichroic filters 112, 122 and between the third and fourth dichroic filters 139, 122 respectively. A focusing lens 124 and a polarizer 125 are disposed on the light path between the fourth dichroic filter 122 and the PBS 127. Light path changers, for example, mirrors 118, 133, are disposed in the first and third light paths $L_1$, $L_3$ respectively.

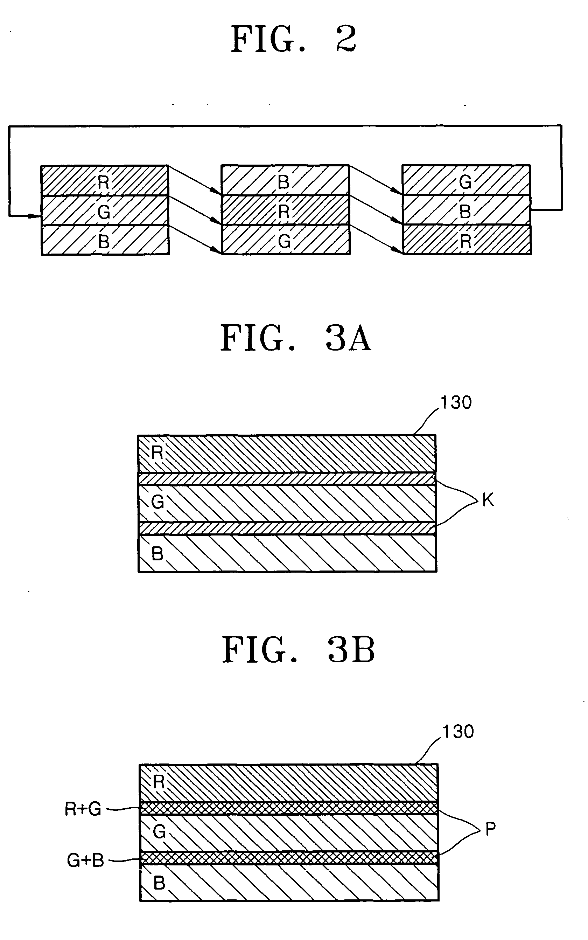

The cyclical scrolling of the red, green and blue colour bars due to rotation of the first through third prisms 114, 135, 142 is illustrated in Figure 2. Scrolling represents the movement of the colour bars, formed on the surface of the light valve 130, when the first, second and third prisms 114, 135, 142 are rotated synchronously. As described above, one frame of a colour image is formed by one complete scrolling cycle during which the red, green and blue bars have swept across the whole of the light valve.

A colour image obtained by turning on or off the individual pixels of the light valve 130 according to an image signal is magnified by a projection lens (not shown). Then, the magnified image is made incident on a screen.

First, second and third slits 113, 134, 143 are disposed in front of the first, second, and third prisms 114, 135, 142 respectively and control the divergence angle of incident light. The heights of the colour bars are set by heights of respectively the first, second and third slits 113, 134, 143. If the slit heights are too small, the red, green and blue bars do not meet along their sides and black bars K are formed between adjacent colour bars as illustrated in Figure 3A. On the other hand, if the slit heights are too large, the red, green and blue colour bars overlap forming overlapping portions P, as illustrated in Figure 3B.

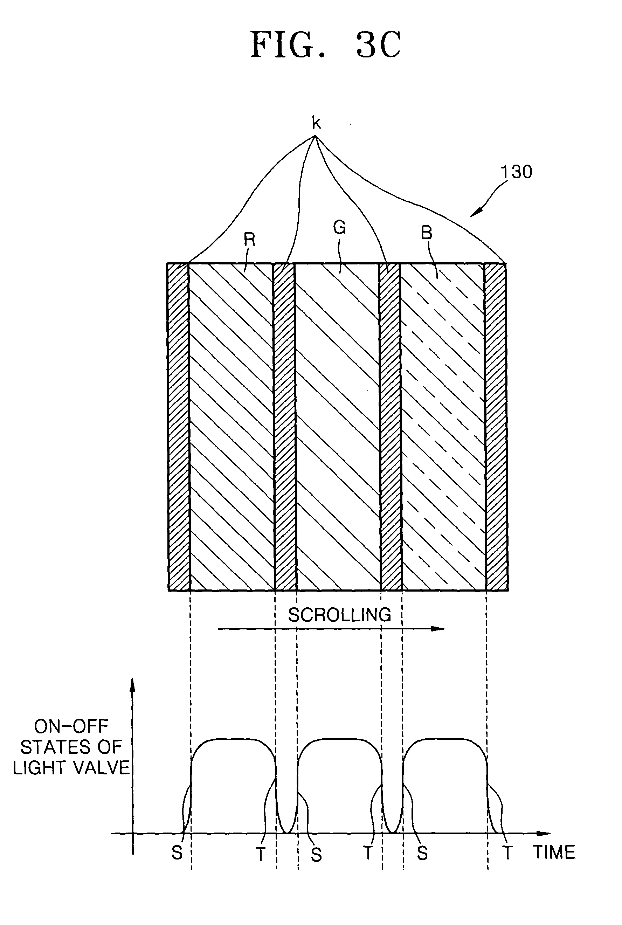

There is a special case that needs the black bars K. When a liquid crystal display (LCD) is used as the light valve 130, the black bars K must be formed because consecutively processing image signals for different coloured bars is difficult. More specifically, when coloured bars are consecutively scrolled on the LCD, image signals are changed every time the coloured bars are scrolled. However, consecutively processing the changing image signals is difficult. Figure 3C illustrates red, green and blue bars formed on the light valve 130 and the on-off states of the light valve 130 according to input image signals corresponding to the red, green and blue bars. The time required to turn on image signals corresponding to the red, green and blue colour bars is referred to as the rising time and the rising areas are indicated by S. The time required to turn off the image signals corresponding to the red, green and blue bars is referred to as the falling time and the falling areas are indicated by T. The rising and falling times are required to turn on and off a group of image signals changing every time the red, green and blue colour bars are scrolled. To obtain these rising and falling periods of time, black bars k must be formed between adjacent colour bars.

A video projection apparatus, according to the present invention, is characterised in that the scrolling unit comprises a rotary spiral lens means.

As described above, systems which form a colour image using a colour scrolling technique should form black bars by controlling the widths of the bars.

Preferably, an etendue setting slit means is included and the slit means is adjustable to vary the width of an etendue setting slit. Preferably, the etendue setting slit means comprises means for defining a plurality of colour specific etendue setting slits. More preferably, the means for defining a plurality of colour-specific etendue setting slits comprises colour filter means moveable to control the widths of respective colour-specific etendue setting slits.

Preferably, the rotary spiral lens means comprises a disc having a radially spiralling lens thereon.

Additional preferred and optional features of the invention are set forth in claims 7 to 35 appended hereto.

Embodiments of the present invention will now be described, by way of example,

Figure 1 is a schematic diagram of a known projection system;
Figure 2 is an illustration of colour scrolling in the known projection system;
Figures 3A and 3B show colour bars formed on a light valve used in a the known ;
Figure 3C illustrates colour bars formed on a light valve and the on-off states of the light valve according to input image signals corresponding to the colour bars;
Figure 4 is a schematic diagram of a projection system according to the present invention;
Figures 5A is a front view of the scrolling unit of Figure 4;
Figure 5B is a perspective view of an alternate scrolling unit that can be used in the projection system of Figure 4;
Figure 6A shows the shape of a beam on the scrolling unit of Figure 4 when no cylindrical lenses are used in the projection system of Figure 4;
Figure 6B shows the shape of a beam on the scrolling unit of Figure 4 when a first cylindrical lens is used in the projection system of Figure 4;
Figures 7A through 7C show the scrolling operation of the projection system of Figure 4;
Figure 8 illustrates a method of forming a colour image according to the present invention;
Figure 9 is a perspective view of a spatial filter in the projection system of Figure 4;
Figure 10A through 10C illustrate examples where the widths of colour bars formed on a light valve are set by the width of the slit of the spatial filter in the projection system of Figure 4; and
Figure 11A through 11C illustrate examples where the widths of colour bars formed on a light valve are set by the widths of the slits of the spatial filter and a trim filter(s).

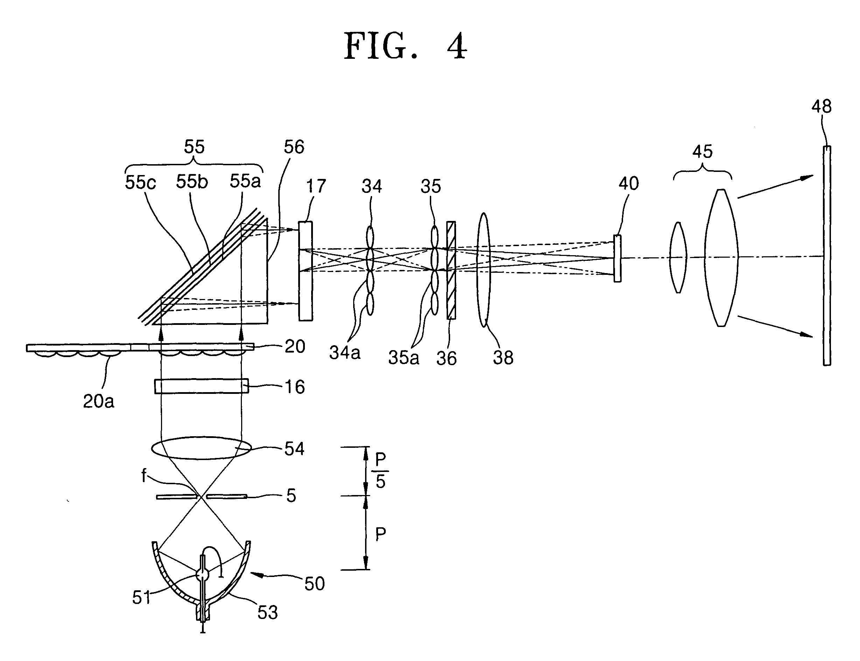

Referring to Figure 4, a projection system according to an embodiment of the present invention includes a light source 50, filter, a scrolling unit 20, a colour separator 55 and a light valve 40. The filters are installed at a focal plane of light emitted from the light source 50 and has a slit for controlling the divergence angle of incident light (the etendue of an optical system). The scrolling unit 20 is designed so that rays in incident light are incident upon the colour separator 55 at different angles as it rotates so that scanning beams are produced. The colour separator 55 separates light passing through the scrolling unit 20 according to colour. The light valve 40 modulates the colour beams, produced by the colour separator 55, according to input image signals and forms a picture.

The picture formed by the light valve 40 is magnified by a projection lens unit 45, and the magnified picture is projected onto a screen 48.

The light source 50 includes a lamp 51 and a mirror 53, for directing the light from the lamp 51 in the desired direction. The mirror 53 is an elliptical mirror whose first focal point is at the lamp 51 and whose second focal point (f) is at the slit. Alternatively, the mirror 53 may be a parabolic mirror, arranged such that the lamp 51 is at its focal point, which collimates the light from the lamp 51. If a parabolic mirror is used, a lens is required for focusing the light at the slit.

The filters includes a space filter 5 or a trim filter(s), preferably, but not necessarily, at the focal point (f) of the mirror 53.

A collimating lens 54 for collimating incident light is installed in the light path between the filter 5 and the colour separator 55. P denotes the distance between the light source 50 and the focal point (f) where light from the light source 50 is focused by the mirror 53. The collimating lens 14 is preferably, but not necessarily, installed at a distance of P/5 from the focal point (f). By arranging a projection system in this way, the structure of an optical system can be made more compact.

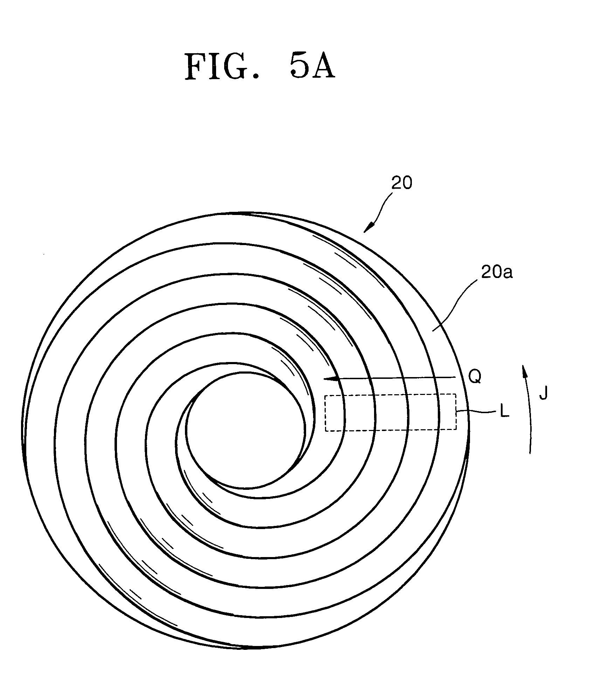

Referring to Figure 5A, the scrolling unit 20 is rotatable and has an input side and an output side. Preferably, but not necessarily, an arrangement of spiral lens cells 20a is disposed on the scrolling unit 20 so that the rotation of the scrolling unit 20 is converted into an apparent linear motion of an area of the scrolling unit 20 through which light passes. Each lens cell 20a transmits incident light so that the rays in the incident light travel at different angles. Each lens cell 20a may be a cylindrical lens. In an alternative embodiment, the lens cells are helical and the scrolling unit is cylindrical

As shown in Figure 5A, rotation of the scrolling unit 20 in the direction indicated by arrow J produces the appearance of linear motion, in the direction indicated by arrow Q, of lens cells 20a in an area of the scrolling unit 20 through which incident light (L) passes, whereby scrolling is achieved. The scrolling unit 20 is a single spiral lens disk.

The single disc shown in Figure 5A may be replaced by first and second parallel spiral lens discs 26, 27, disposed at a predetermined distance from each other, as illustrated in Figure 5B. In this case, a glass bar (or a guide light plate) 28 is interposed between the first and second spiral lens disks 26, 27. The glass bar 28 controls the divergence angle of light passing through the first spiral lens disk 26.

Referring back to Figure 4, the colour separator 55 includes first, second and third dichroic filters 55a, 55b, 55c which transmit or reflect incident light according to colour. The first, second and third dichroic filters 55a, 55b, 55c are disposed parallel to one another. However, the first, second and third dichoric filters 55a, 55b, 55c may be disposed aslant at different angles. Rays included in a light beam incident upon the scrolling unit 20 are transmitted at different angles according to different locations on each of the cylindrical lens cells 20a upon which the rays are incident. The light beam rays are reflected by the first, second or third dichroic filter 55a, 55b, 55c such that the light beam is separated according to colour. Also, a prism 56 is further included between the scrolling unit 20 and the colour separator 55 such that incident light is transferred to the colour separator 55 without a change in the path of the light.

A first cylindrical lens 16 is disposed in front of the scrolling unit 20 and a second cylindrical lens 17, first and second fly-eye lens arrays 34, 35 and a relay lens 38 are arranged in series in the light path between the colour separator 55 and the light valve 40. The first and second fly-eye lens arrays 34, 35 are formed by two-dimensionally arranging lens cells 34a, 35a respectively.

The first cylindrical lens 16 reduces the width of the light beam incident upon the scrolling unit 20 and the second cylindrical lens 17 widens the beam to its original width. The second cylindrical lens 17 may be installed between the first and second fly-eye lens arrays 34, 35. A polarization conversion system 36 for converting an incident light into a light with a single polarization is disposed between the second fly-eye lens array 35 and the relay lens 38.

In the operation of the projection system of Figure 4 with the above-described configuration, white light from the light source 50 is incident upon the scrolling unit 20 via the spatial filter 5 and the collimating lens 54. The width of the light incident on the scrolling unit 20 is reduced by the first cylindrical lens 16.

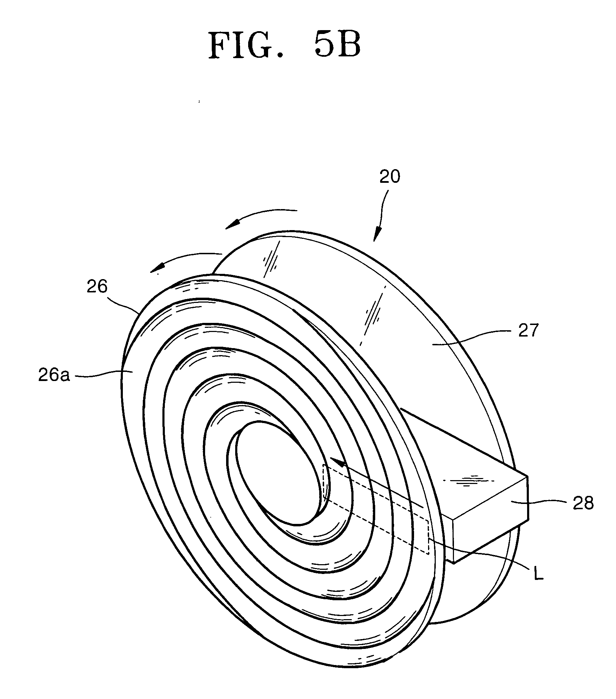

Referring to Figure 6A, a hypothetical beam L' from the light source 50 is incident on the scrolling unit 20 without first passing through the first cylindrical lens 16. Beam L' has a width W'.

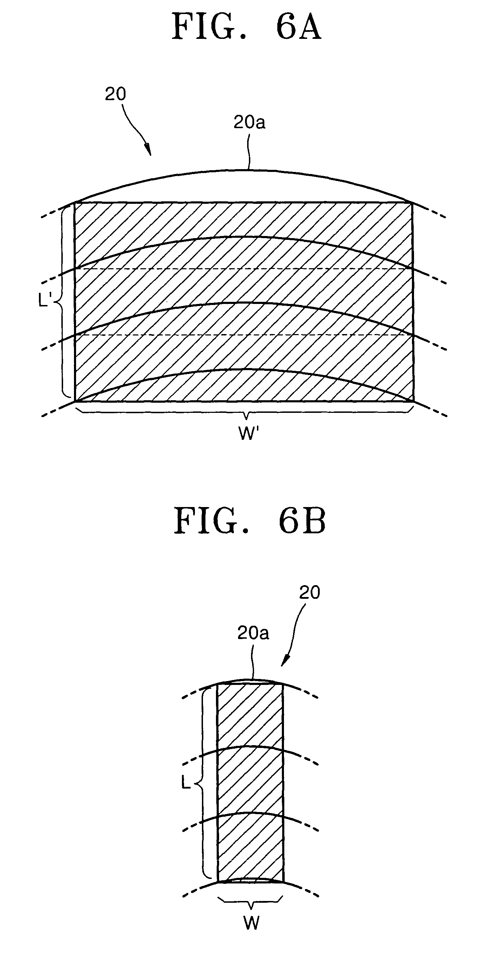

Referring to Figure 6B, the beam L, having a reduced width W produced by the first cylindrical lens 16, is incident upon the scrolling unit 20.

When a beam passing through the scrolling unit 20 is relatively wide, as in the case of the beam L', there is a high probability that a transverse line across the beam L' will extend over two lens cells 20a, and thus there is light loss over an unmatched area for each colour. To minimize the light loss, preferably, but not necessarily, the first cylinder lens 16 is included to produce the beam L with a reduced width W so that the shape of the beam L aligns more closely with that of the array of spirally arranged lens cells 20a as illustrated in Figure 6B.

Rays in the light incident upon the scrolling unit 20 travel at different angles, according to different locations on the lens cells 20a where they are incident. The rays are incident upon the colour separator 55 at different angles. First, second and third colour beams produced by the first, second, and third dichroic filters 55a, 55b, 55c of the colour separator 55 are incident upon the second cylindrical lens 17, which restores the beams to the original beam width or some other desired increased width. Consequently, the width of the light transmitted by the second cylindrical lens 17 corresponds to the width of the light valve 40.

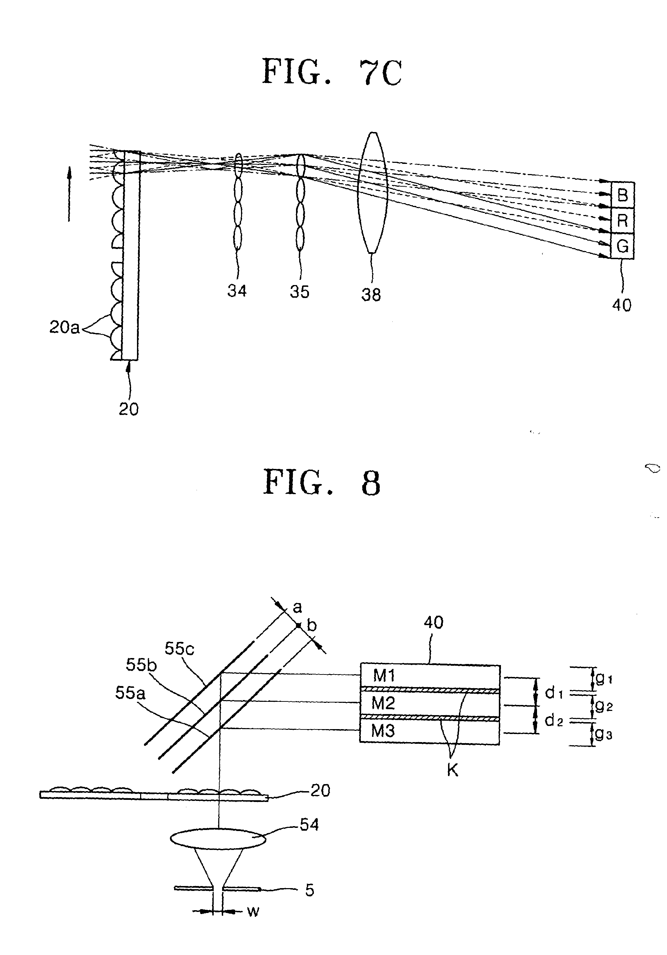

The first, second and third coloured beams passing through the second cylindrical lens 17 are incident upon on the first fly-eye lens array 34 so that colour lines are formed on each of the lens cells 34a. By passing through the second fly-eye lens array 35 and the relay lens 38, the first, second and third coloured beams are made incident on different areas of the light valve 40 to form first, second and third coloured bars M1, M2, M3 as illustrated in Figure 8.

The first, second, and third colour bars M1, M2, and M3 are periodically scrolled due to a rotation of the scrolling unit 20, thereby forming a colour image.

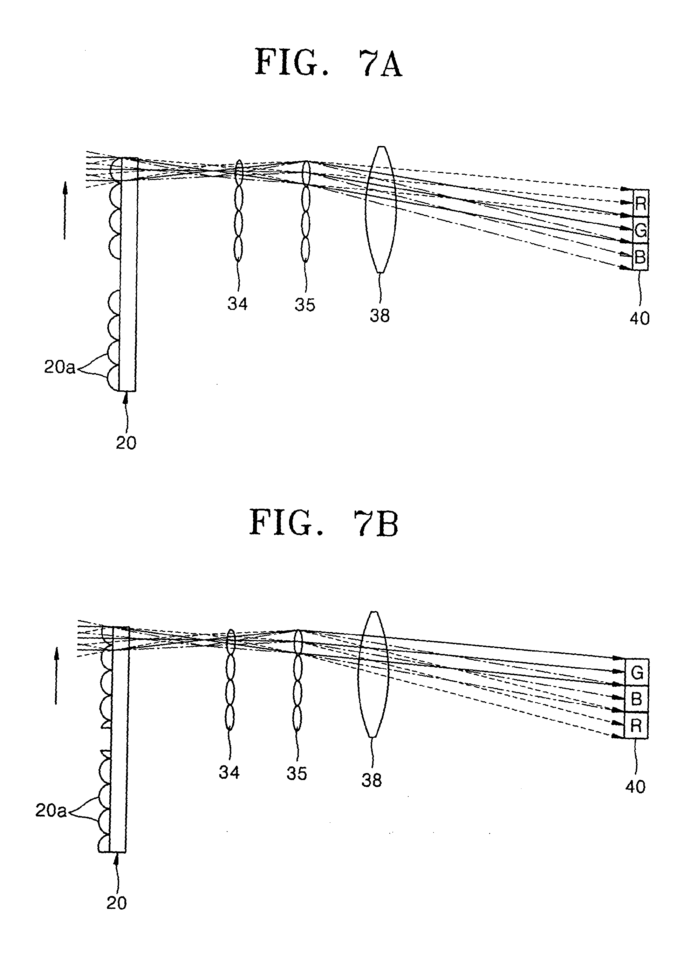

Referring to Figures 7A through 7C, the red, green and blue bars, formed on the light valve 40, are scrolled due to a rotation of the scrolling unit 20 from the sequence red, green, blue, to the sequence green, blue, red and then to the sequence blue, red, green. This scrolling is repeated. The scrolling unit 20 of Figures 7A through 7C is a single spiral lens disk.

First, as illustrated in Figure 7A, the red, green and blue components of the white light from the lamp 51 pass through the scrolling unit 20, the colour separator 55 (omitted from Figures 7A to 7C), the first and second fly-eye lens arrays 34, 35 and the relay lens 38, and coloured bars are formed on the light valve 40 in a predetermined order, e.g. red, green and blue. Next, the scrolling unit 20 rotates and, accordingly, the lens cell array of the scrolling unit 20 through which the incident light L passes gradually moves upward (assuming the orientation shown in Figures 7A to 7C). Accordingly, the focal points of the colour components passing through the scrolling unit 20 vary as the scrolling unit 20 moves, and coloured bars in the order of green, blue, red are formed, as illustrated in Figure 7B. Then, the scrolling unit 20 rotates, the incident colour components are scrolled and coloured bars in an order blue, red, green are formed as illustrated in Figure 7C. Such scrolling is repeated cyclically.

Referring to Figure 5A, when the scrolling unit 20 rotates in the direction indicated by arrow J, the lens cells 20a in the region, illuminated by the beam L, appear to move in the direction indicated by arrow Q. In other words, as the scrolling unit 20 rotates, the lens configuration of the scrolling unit 20 through which the incident light L passes is changed. The change of the lens configuration of the scrolling unit 20 through which the incident light L passes appears as radially inward or outward movement. However, if the scrolling unit 20 has a drum shape, the area of the scrolling unit 20 through which the incident light L passes rectilinearly moves along the rotating axis of the scrolling unit 20.

In other words, the positions of lens cells 20a upon which light is incident change with the rotation of the scrolling unit 20, and the rotation of the scrolling unit 20 simulates a rectilinear motion of the lens array of the scrolling unit 20 as viewed from the cross-section of the scrolling unit 20 so that scrolling is achieved.

As described above, in a projection system according to the present invention, all of the colour beams can be processed using a single scrolling unit 20 instead of different scrolling units. Hence, the projection system can be made compact, and different colour beams can be easily synchronized with one another. It is preferable that lens cells 20a of the scrolling unit 20 through which light passes can be matched with row arrays of the first and second fly-eye lens arrays 34, 35 in a one-to-one correspondence. In other words, if the number of lens cells 20a occupied by light passing through the scrolling unit 20-is 4, each of the first and second fly-eye lens arrays 34, 35 can have 4-row arrays.

The colour bars formed on the light valve 40 are scrolled in the way described above, thereby forming a colour image.

If a liquid crystal display (LCD) or a liquid crystal on silicon (LCOS) display is used as the light valve 40, rising and falling times are required for turning on and off groups of pixels changing every time the red, green and blue bars are scrolled. To secure these rising and falling periods of time, black bars must be formed between adjacent colour bars. Formation of black bars on the light valve 40 will now be described with reference to Figure 8, which schematically illustrates the spatial filter 5, the colour separator 55, and the light valve 40.

Referring to Figure 8, for convenience of explanation, the intervals between the first and second dichroic filters 55a, 55b (b) and between the second and third dichroic filters 55b, 55c (a) are shown somewhat exaggerated. The coloured beams produced by the colour separator 55 land on different areas of the light valve 40, thereby forming the first, second, and third bars M1, M2, and M3.

The case where the widths of the first, second and third colour bars M1, M2, M3 are indicated by g1, g2, and g3, respectively, and equal to one another will now be described.

The width of each bar, g ($g=g_1=g_2=g_3$), depends on the width (w) of the slit 5c. The intervals d, and $d_2$ between the first and second bars M1 and M2 and between the second and third bars M2 and M3 depend on the intervals a and b respectively. The interval between adjacent colour bars denotes the interval between the central lines of the adjacent colour bars. The intervals $d_1$ and $d_2$ satisfy Equation 1:

$$d_1 = \alpha a \sqrt{2}$$

$$d_2 = \alpha b \sqrt{2} \qquad (1)$$

where $\alpha$ denotes a constant. For example, $\alpha$ can be a magnification. When the slit width of the spatial filter is w, the focal distance of the collimating lens 54 is f1 and the focal distance of the scrolling unit 20 is f2, the width g of each colour bar can be calculated from Equation 2:

$$g = w \frac{f_2}{f_1} \qquad (2)$$

To form black bars K between the first and second colour bars M1, M2 and between the second and third colour bars M2, M3, the interval between adjacent colour bars must be greater than the mean of the widths of the adjacent colour bars. In other words, the width g of each colour bar must be smaller than each of the interval $d_1$ between the first and second colour bars M1, M2 and the interval $d_2$ between the second and third colour bars M2, M3. The conditions for forming the black bars K can be expressed as in conditional expression 3:

$$a > \frac{g}{\alpha \sqrt{2}} = \frac{wf_2}{\alpha \sqrt{2} f_1}$$

$$b > \frac{g}{\alpha \sqrt{2}} = \frac{wf_2}{\alpha \sqrt{2} f_1} \qquad (3)$$

When the conditions represented in conditional expression 3 are satisfied, the black bars K are formed between the first and second colour bars M1, M2 and between the second and third colour bars M2, M3, so that the rising time and the falling time required to turn on and off image signals to be changed every time the locations of the colour bars are changed can be secured.

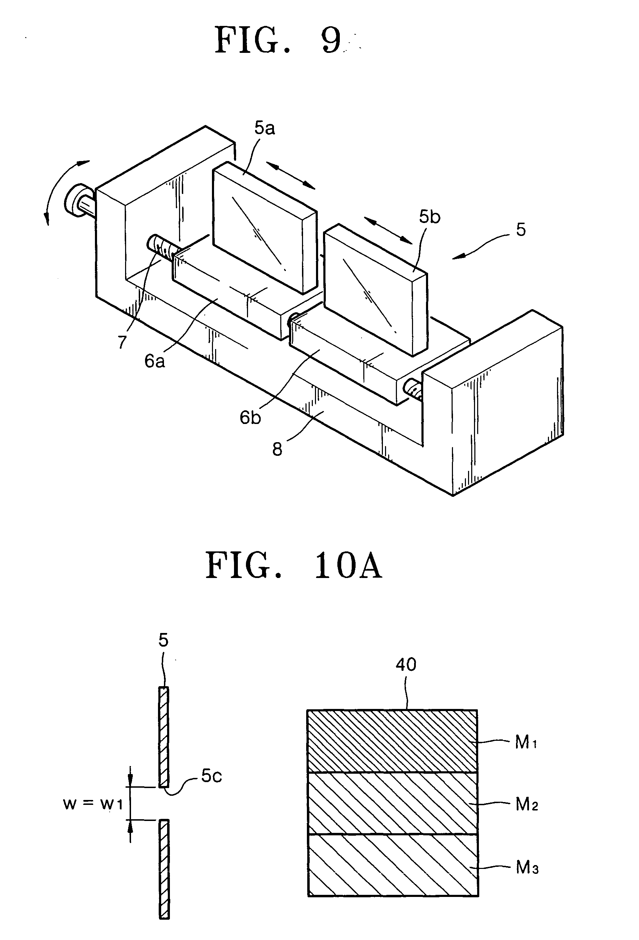

The spatial filter 5 is designed such that the width w of a slit 5c of Figure 10A through 11 C can be controlled. As shown in Figure 9, the spatial filter 5 includes a first filter plane 5a, a second filter plane 5b disposed distant from the first filter plane 5a, first and second support plates 6a and 6b which support the first and second filter planes 5a, 5b, respectively, and are movable by a transfer screw 7, and a frame 8 rotatably supported by the transfer screw 7. When the transfer screw 7 is rotated, the first and second support plates 6a and 6b move along the transfer screw 7 and control the width w of the slit 5c between the first and second filter planes 5a and 5b. Preferably, but not necessarily, the width of the slit 5c is controlled in a colour separation direction or a colour scrolling direction.

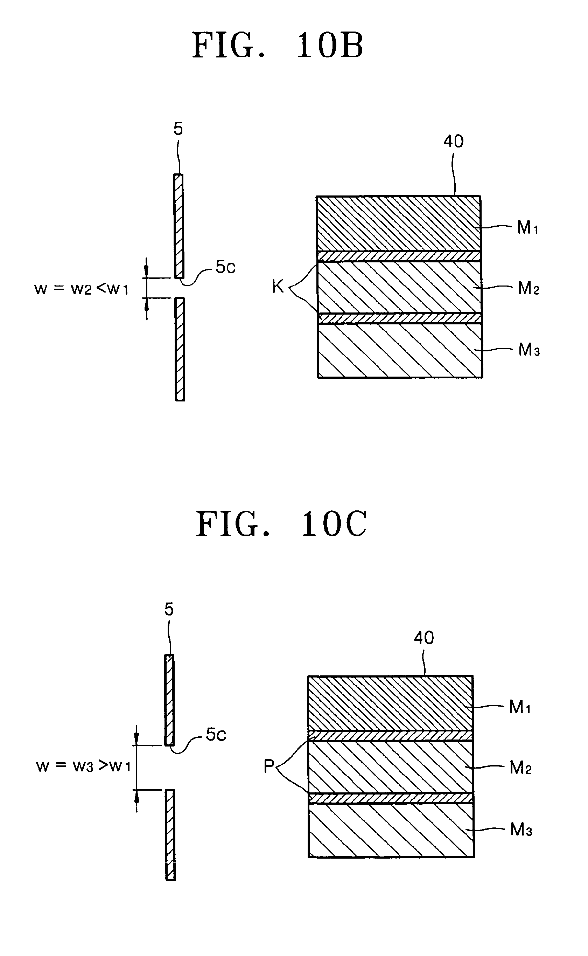

As shown in Figure 10A, when the width w of the slit 5c is $w_1$, the first, second, and third colour bars M1, M2, and M3 are formed in corresponding colour areas of the light valve 40 which have equal sizes. If the slit width w changes from $w_1$ to $w_2$ ($w_2 < w_1$), black bars K are formed between adjacent colour bars as illustrated in Figure 10B. If the slit width w changes from $w_1$ to $w_3$ ($w_3 > w_1$), the red, green and blue bars are enlarged such that overlapping portions P are formed between adjacent colour bars as illustrated in Figure 10C.

As described above, the black bar K between adjacent colour bars can be controlled by satisfying the conditions represented in Equation 3 by adjusting the slit width w or the intervals a and b.

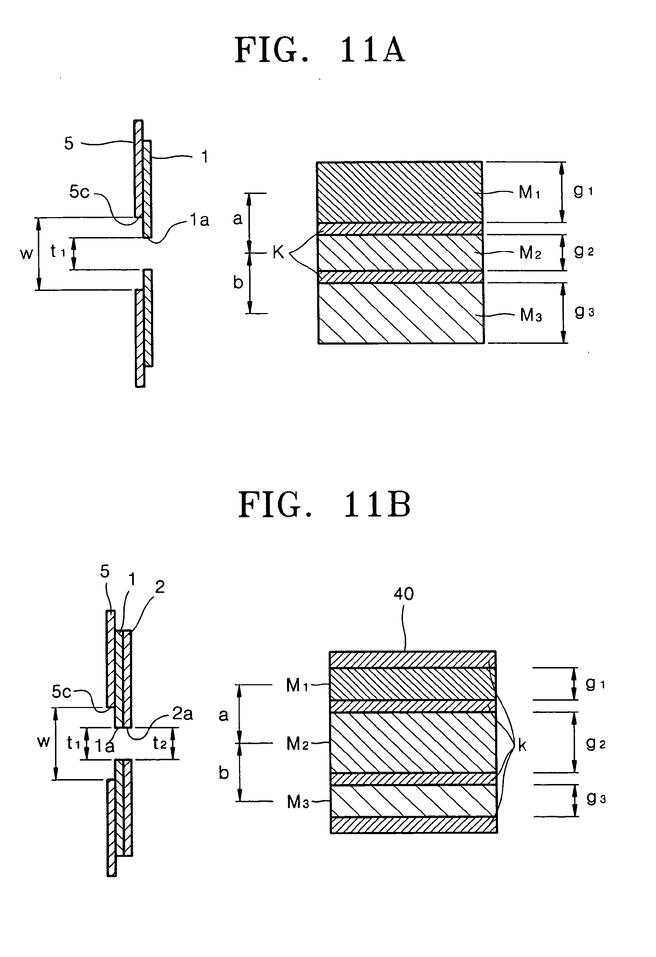

The case where the widths $g_1$, $g_2$, and $g_3$ of the first, second, and third colour bars M1, M2, and M3 are different from one another will now be described with reference to Figures 11A through 11C.

As shown in Figures 11A through 11C, at least one of first, second, and third trim filter 1, 2, and 3, which have slits 1a, 2a, and 3a, respectively, may be further included to control the widths or areas of the colour bars. The first, second, and third slits 1a, 2a, and 3a of the first, second, and third trim filters 1, 2, and 3 transmit beams of all colours, and the first, second, and third filters 1, 2, and 3 reflect a beam of a specific colour and transmits beams of all other colours so that the width of the specific colour beam can be controlled.

Figure 11A shows the case where the first trim filter 1 is attached to the spatial filter 5. The first trim filter 1 reflects or otherwise blocks green light, for example, and transmits the other colours, i.e. red and blue. The first slit 1a transmits the beams of all colours. The first trim filter 1 is installed behind the spatial filter 5. However, the first trim filter 1 may be installed in front of the spatial filter 5. First, the widths of colour bars are determined to be the same by the width w of the slit 5c of the-spatial filter 5. Then, the width of a specific-colour-bar is determined by the width $t_1$ of the first slit 1a of the first trim filter 1. In Figure 11A, the width $g_2$ of the second colour bar M2, for example, a G colour bar, is controlled by the first trim filter t1.

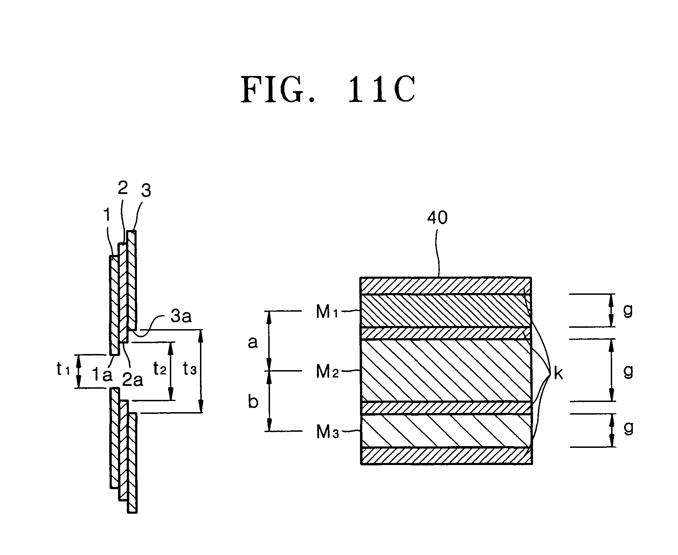

Figure 11B shows the case where the first and second trim filters 1, 2 are attached to the spatial filter 5. Figure 11 C shows the case where the first, second, and third trim filters 1, 2, 3 are included instead of the spatial filter 5. The first, second, and third trim filters 1, 2, 3 may be manufactured by coating the spatial filter 5 or a separate glass with filters. Alternatively, the first, second and third trim filters 1, 2, 3 may be filter plates.

The widths of the first, second, and third slits 1a, 2a, 3a and the width of the slit 5c are controlled in a direction of colour separation by the colour separator 55 or a colour scrolling direction.

Referring back to Figure 8, the ratio of the interval a between the first and second dichroic filters 55a, 55b to the interval b between the second and third dichroic filters 55b, 55c is the same as that of the sum of the first and second widths $g_1$, $g_2$ to the sum of the second and third widths $g_2$, $g_3$. To form a black bar K between the first and second colour bars M1, M2, the mean of the first and second widths $g_1$, $g_2$ must be smaller than the interval d, between the first and second colour bars M1, M2. To form a black bar K between the second and third colour bars M2, M3, the mean of the second and third widths $g_2$, $g_3$ must be smaller than the interval $d_2$ between the second and third colour bars M2, M3. In other words, when the interval between adjacent colour bars is greater than the mean of the widths between the adjacent colour bars, a black bar K is formed between the adjacent colour bars. The above-described conditions to form a black bar K are represented as in Equation 4, by referring to Equation 1:

$$a > \frac{(g_1 + g_2)}{\alpha 2 \sqrt{2}}$$

$$b > \frac{(g_2 + g_3)}{\alpha 2 \sqrt{2}} \qquad (4)$$

The widths $g_1$, $g_2$, $g_3$ of the first, second and third colour bars M1, M2, M3 can be controlled by the width of the slit 5c and the widths $t_1$, $t_2$, $t_3$ of the first, second and third trim filters 1, 2, and 3.

Referring to Figure 11A, the widths $g_1$, $g_2$, and $g_3$ of the first, second, and third colour bars M1, M2, and M3 are first determined depending on the width w of the slit 5c. Thereafter, the width of a beam of a specific colour bar is determined depending on the width $t_1$ of the first trim filter 1. Preferably, the structure of Figure 11A satisfies the relation of $w > t_1$. If the width $g_2$ of the second colour bar M2 is adjusted by the width $t_1$ of the first trim filter 1, the widths $g_1$ and $g_3$ of the first and third colour bars are determined depending on the width w of the slit 5c, and the width $g_2$ of the second colour bar is determined depending on the width $t_1$ of the first trim filter 1 as represented in Equation 5:

$$g_1 = g_3 = w\frac{f_2}{f_1}$$

$$g_2 = t_1\frac{f_2}{f_1} \quad (5)$$

A black bar K can be formed between adjacent colour bars by controlling at least one of the intervals a and b, the width w of the slit 5c, the width $t_1$ of the first trim filter 1, the focal distance $f_1$ of the collimating lens 54, and the focal distance $f_2$ of the scrolling unit 20 with reference to Equations 4 and 5.

Referring to Figure 11B, the widths $g_1$, $g_2$, $g_3$ of the first, second and third colour bars M1, M2, M3 are first determined depending on the width w of the slit 5c. Thereafter, the width $g_1$ of the first colour bar M1 is determined depending on the width $t_1$ of the first trim filter 1, and the width $g_3$ of the third colour bar M3 is determined depending on the width $t_2$ of the second trim filter 2. Consequently, the first, second, and third widths $g_1$, $g_2$, $g_3$ of the first, second, and third colour bars M1, M2, M3 are determined by Equation 6:

$$g_1 = t_1\frac{f_2}{f_1}$$

$$g_2 = w\frac{f_2}{f_1}$$

$$g_3 = t_2\frac{f_2}{f_1} \quad (6)$$

Preferably, but not necessarily, the widths $t_1$, $t_2$ of the first and second trim filters 1 and 2 are smaller than the width w of the slit 5c. A black bar K can be formed between adjacent colour bars by controlling at least one of the intervals a and b, the width w of the slit 5c, the widths $t_1$, $t_2$ of the first and second trim filters 1, 2, the focal distance $f_1$ of the collimating lens 54, and the focal distance $f_2$ of the scrolling unit 20 so that the conditions represented in Equation 4 are satisfied.

Referring to Figure 11C, the width $g_1$ of the first colour bar M1 is determined depending on the width $t_1$ of the first trim filter 1, the width $g_2$ of the second colour bar M2 is determined depending on the width $t_2$ of the second trim filter 2, and the width $g_3$ of the third colour bar M3 is determined depending on the width $t_3$ of the third trim filter 3. These relations are expressed in Equation 7:

$$g_1 = t_1\frac{f_2}{f_1}$$

$$g_2 = t_2\frac{f_2}{f_1}$$

$$g_3 = t_3\frac{f_2}{f_1} \quad (7)$$

The black bars can also be formed by controlling the first, second, and third widths $g_1$, $g_2$, $g_3$ of the first, second and third colour bars M1, M2, M3 with reference to Equation 7 or by controlling the intervals a and b so that the conditions represented in Equation 4 are satisfied.

As described above, the widths of colour bars can be selectively controlled using the spatial filter 5 with at least one trim filter or using three trim filter without the spatial filter 5. Furthermore, the widths of black bars can be controlled by controlling the intervals a and b between the first and second dichroic filters 55a, 55b and between the second and third dichroic filters 55b, 55c.

Examples of projection systems according to the present invention include at least one filter having a slit for controlling the widths of the first, second and third colour bars M1, M2, M3. For example, the filter means may include only the spatial filter 5, include both the spatial filter 5 and at least one trim filter, or include first, second and third trim filters 1, 2, 3 without the spatial filter 5. When the slit widths of the spatial filter 5 and the first, second, and third trim filters 1, 2, and 3 are w, $t_1$, $t_2$, and $t_3$, respectively, they can be controlled so that Equation 3 or 4 is satisfied.

As described above, in an example of a projection system according to the present invention, beams of all colours can be scrolled using a single scrolling unit designed so that its rotation simulates a rectilinear motion of a lens array of the scrolling unit through which light passes. Thus, scrolling is easily controlled, and the number of components is reduced. Consequently, a small, cost-efficient projection system can be obtained. The scrolling unit may have a drum shape instead of a disk shape as long as that its rotation simulates a rectilinear motion of a lens array of the scrolling unit through which light passes.

Also, since a conventional single-panel projection system produces colour images by sequentially separating white light into red, green and blue light beams, the efficiency is degraded to 1/3 of the light efficiency of a three-panel projection system.

However, in a single-panel projection system using a scrolling technique according to the present invention, white light is separated into red, green and blue beams at one time, and the red, green and blue beams are scrolled to form a colour image. Therefore, the single-panel projection system according to the present invention can obtain the same light efficiency as the light efficiency of a three-panel projection system.

Further, in a colour image forming method according to the present invention, a black bar is formed between adjacent colour bars formed on a light valve so that a rising time and a falling time required to change image signals for the colour bars can be secured. Hence, a colour image can be smoothly formed.

**Claims**

1. A video projection apparatus comprising:

a light source (50);
a scrolling unit (20);
a colour separator (55); and
a light valve (40),

**characterised in that** the scrolling unit (20) comprises a rotary spiral lens means.

2. An apparatus according to claim 1, including an etendue setting slit means (5), wherein the slit means (5) is adjustable to vary the width of an etendue setting slit.

4. An apparatus according to claim 2, wherein the etendue setting slit means (5) comprises means (1, 2) for defining a plurality of colour specific etendue setting slits.

5. An apparatus according to claim 3, means (1, 2) for defining a plurality of colour-specific etendue setting slits comprises colour filter means (1, 2) moveable to control the widths of respective colour-specific etendue setting slits.

6. An apparatus according to any preceding claim, wherein the rotary spiral lens means (20) comprises a disc having a radially spiralling lens thereon.

7. A projection system comprising:

a light source;
at least one filter having a slit which controls a divergence angle of light emitted from the light source;
a scrolling unit comprising at least one lens cell, which converts a rotation of the lens cell into a rectilinear motion of an area of the lens cell through which light passes so that the incident beam is scrolled;
a colour separator comprising a plurality of dichroic filters, which separates an incident beam emitted from the light source according to colour, wherein each dichroic filter transmits a beam with one length from the incident beam and reflect beams with other lengths; and
a light valve which receives a plurality of colour beams separated by the colour separator and transmitted by the scrolling unit on corresponding colour areas and forms a plurality of colour bars by scrolling the colour bars due to a rotation of the scrolling unit,

wherein a black bar is formed between adjacent colour bars by controlling a distance between adjacent dichroic filters or controlling a width of the slit.

8. The projection system of claim 7, wherein the distance between adjacent c colour bars is greater than a mean of the widths of the adjacent colour bars.

9. The projection system of claim 7, wherein when the plurality of dichroic filters are first, second, and third dichroic filters disposed parallel to one another, the plurality of colour bars are first, second and third colour bars having widths $g_1$, $g_2$, and $g_3$, and distances between the first and second dichroic filters and between the second and third dichroic filters are a and b, respectively, the first, second and third dichroic filters are disposed to satisfy the following conditional expression:

$$a > \frac{(g_1 + g_2)}{\alpha 2 \sqrt{2}}$$

$$b > \frac{(g_2 + g_3)}{\alpha 2 \sqrt{2}}$$

10. The projection system of claim 7, wherein the at least one lens cell of the scrolling unit is spirally disposed.

11. The projection system of claim 7, wherein when the at least one filter includes a spatial filter having a slit with a width w, a focal distance of the spatial filter is $f_1$, a focal distance of the scrolling unit $f_2$, is a proportional constant, and widths of the first, second, and third colour bars are equal, the spatial filter and the first, second, and third dichroic filters are disposed to satisfy the following conditional expression:

$$a > \frac{g}{\alpha \sqrt{2}} = \frac{wf_2}{\alpha \sqrt{2} f_1}$$

$$b > \frac{g}{\alpha\sqrt{2}} = \frac{wf_2}{\alpha\sqrt{2}f_1}$$

**12.** The projection system of claim 11, wherein when the at least one filter includes a trim filter with a slit width t1 in addition to the spatial filter, a focal distance of each of the spatial filter and the trim filter is $f_1$, and a focal distance of the scrolling unit $f_2$, the widths of the first and second colour bars are controlled by the spatial filter and the width of the third colour bar is controlled by the trim filter according to the following Equation:

$$g_1 = g_3 = w\frac{f_2}{f_1}$$

$$g_2 = t_1\frac{f_2}{f_1}$$

**13.** The projection system of claim 11, wherein when the at least one filter includes first and second trim filters with slit widths t1 and t2 in addition to the spatial filter, a focal distance of each of the spatial filter and the first and second trim filters is $f_1$, and a focal distance of the scrolling unit is $f_2$, the width of the first colour bar is controlled by the spatial filter and the widths of the second and third colour bars are controlled by the first and second trim filters according to the following Equation:

$$g_1 = w\frac{f_2}{f_1}$$

$$g_2 = t_1\frac{f_2}{f_1}$$

$$g_3 = t_2\frac{f_2}{f_1}$$

**14.** The projection system of claim 7, wherein when the at least one filter includes first, second, and third trim filters with slit widths t1, t2, and t3 in addition to the spatial filter, focal distances of the first, second, and third trim filters are $f_1$, and a focal distance of the scrolling unit is $f_2$, the widths of the first, second, and third colour bars are controlled by the first, second, and third trim filters, respectively, according to the following Equation:

$$g_1 = t_1\frac{f_2}{f_1}$$

$$g_2 = t_2\frac{f_2}{f_1}$$

$$g_3 = t_3\frac{f_2}{f_1}$$

**15.** The projection system of claim 7, wherein first and second fly-eye lens arrays are disposed on a light path between the colour separator and the light valve.

**16.** The projection system of claim 7, wherein a first cylindrical lens is disposed in front of the scrolling unit and reduces the width of light incident upon the scrolling unit, and a second cylindrical lens is disposed behind the scrolling unit and collimates light passing through the scrolling unit.

**17.** The projection system of claim 16, wherein first and second fly-eye lens arrays are disposed on a light path between the colour separator and the light valve.

**18.** The projection system of claim 17, wherein a relay lens is disposed on a light path between the second fly-eye lens and the light valve.

**19.** The projection system of claim 7, wherein a polarization conversion system is disposed on a light path between the colour separator and the light valve and converts light emitted from the light source into light with a single polarization.

**20.** The projection system of claim 7, wherein the light valve is one of a liquid crystal display (LCD) and a liquid crystal on silicon (LCOS).

**21.** A method of forming a colour image, in which a rising time and a falling time required to change image signals for a plurality of colour bars formed on a light valve are secured, the method comprising:

installing at least one filter having a slit;
scrolling incident light by converting a rotation of a scrolling unit into a rectilinear motion of a lens cell of the scrolling unit through which the incident light passes;
separating a beam emitted from a light source according to colour using a colour separator which comprises a plurality of dichroic filters which each transmit a beam with one length from the incident beam and reflect beams with other lengths;
forming a plurality of colour bars by making a plurality of colour beams separated by the colour separator and transmitted by the scrolling unit incident on corresponding colour areas of the light valve; and

forming a black bar between adjacent colour bars by controlling a distance between adjacent dichroic filters or controlling a width of the slit.

**22.** The method of claim 21, wherein the distance between adjacent colour bars is greater than a mean of the widths of the adjacent colour bars.

**23.** The method of claim 21, wherein when the plurality of dichroic filters are first, second, and third dichroic filters disposed parallel to one another, the plurality of colour bars are first, second and third colour bars having widths $g_1$, $g_2$, and $g_3$, and distances between the first and second dichroic filters and between the second and third dichroic filters are a and b, respectively, the first, second and third dichroic filters are disposed to satisfy the following conditional expression so that black bars are formed between the first and second colour bars and between the second and third colour bars:

$$a > \frac{(g_1 + g_2)}{\alpha 2 \sqrt{2}}$$

$$b > \frac{(g_2 + g_3)}{\alpha 2 \sqrt{2}}$$

**24.** The method of claim 21, wherein the at least one lens cell of the scrolling unit is spirally disposed.

**25.** The method of claim 21, wherein when the at least one filter includes a spatial filter having a slit with a width w, a focal distance of the spatial filter is $f_1$, a focal distance of the scrolling unit $f_2$, is a proportional constant, and widths of the first, second, and third colour bars are equal, the spatial filter and the first, second, and third dichroic filters are disposed to satisfy the following conditional expression:

$$a > \frac{g}{\alpha \sqrt{2}} = \frac{w f_2}{\alpha \sqrt{2} f_1}$$

$$b > \frac{g}{\alpha \sqrt{2}} = \frac{w f_2}{\alpha \sqrt{2} f_1}$$

**26.** The method of claim 25, wherein when the at least one filter includes a trim filter with a slit width t1 in addition to the spatial filter, a focal distance of each of the spatial filter and the trim filter is $f_1$, and a focal distance of the scrolling unit $f_2$, the widths of the first and second colour bars are controlled by the spatial filter and the width of the third colour bar is controlled by the trim filter according to the following Equation:

$$g_1 = g_3 = w \frac{f_2}{f_1}$$

$$g_2 = t_1 \frac{f_2}{f_1}$$

**27.** The method of claim 25, wherein when the at least one filter includes first and second trim filters with slit widths t1 and t2 in addition to the spatial filter, a focal distance of each of the spatial filter and the first and second trim filters is $f_1$, and a focal distance of the scrolling unit is $f_2$, the width of the first colour bar is controlled by the spatial filter and the widths of the second and third colour bars are controlled by the first and second trim filters according to the following Equation:

$$g_1 = w \frac{f_2}{f_1}$$

$$g_2 = t_1 \frac{f_2}{f_1}$$

$$g_3 = t_2 \frac{f_2}{f_1}$$

**28.** The method of claim 21, wherein when the at least one filter includes first, second, and third trim filters with slit widths t1, t2, and t3 in addition to the spatial filter, focal distances of the first, second, and third trim filters are $f_1$, and a focal distance of the scrolling unit is $f_2$, the widths of the first, second, and third colour bars are controlled by the first, second, and third trim filters, respectively, according to the following Equation:

$$g_1 = t_1 \frac{f_2}{f_1}$$

$$g_2 = t_2 \frac{f_2}{f_1}$$

$$g_3 = t_3 \frac{f_2}{f_1}$$

**29.** The method of claim 21, wherein first and second fly-eye lens arrays are disposed on a light path between the colour separator and the light valve.

**30.** The method of claim 21, wherein a first cylindrical lens is disposed in front of the scrolling unit and reduces the width of light incident upon the scrolling unit, and a second cylindrical lens is disposed behind the scrolling unit and collimates light passing through the scrolling unit.

**31.** The method of claim 30, wherein first and second fly-eye lens arrays are disposed on a light path between the colour separator and the light valve.

**32.** The method of claim 31, wherein a relay lens is disposed on a light path between the second fly-eye lens and the light valve.

**33.** The method of claim 21, wherein a polarization conversion system is disposed on a light path between the colour separator and the light valve and converts light emitted from the light source into light with a single polarization.

**34.** The method of claim 21, wherein the light valve is one of a liquid crystal display (LCD) and a liquid crystal on silicon (LCOS).

**35.** A scrolling unit **characterised by** a planar spiral lens structure (20a) mounted for rotation about an axis perpendicular to the plane of the lens structure.

# FIG. 1 (PRIOR ART)

EP 1 480 467 A2

# FIG. 2

# FIG. 3A

# FIG. 3B

# FIG. 3C

# FIG. 4

EP 1 480 467 A2

# FIG. 5A

# FIG. 5B

# FIG. 6A

# FIG. 6B

# FIG. 7A

# FIG. 7B

# FIG. 7C

20a

20

34    35    38

B
R
G

40

# FIG. 8

a
b

55c
55b
55a

40

M1
M2
M3

K

d₁
d₂

g₁
g₂
g₃

20

54

5

w

# FIG. 9

## FIG. 10A

$$w = w_1$$

# FIG. 10B

5

40

5c

$w = w_2 < w_1$

M₁

K

M₂

M₃

# FIG. 10C

5

40

5c

$w = w_3 > w_1$

M₁

P

M₂

M₃

# FIG. 11A

# FIG. 11B

# FIG. 11C